(19) Europäisches Patentamt / European Patent Office / Office européen des brevets

(11) **EP 4 257 369 B1**

(12) **EUROPEAN PATENT SPECIFICATION**

(45) Date of publication and mention
of the grant of the patent:
**22.01.2025 Bulletin 2025/04**

(21) Application number: **22166473.3**

(22) Date of filing: **04.04.2022**

(51) International Patent Classification (IPC):
*B60C 1/00* *(2006.01)*  *C08L 7/00* *(2006.01)*
*B60C 11/03* *(2006.01)*  *B60C 11/12* *(2006.01)*

(52) Cooperative Patent Classification (CPC):
(C-Sets available)
**B60C 1/0016; B60C 11/0306; B60C 11/0327;
C08L 7/00;** B60C 2011/0346; B60C 2011/1213;
B60C 2200/04                                    (Cont.)

(54) **TYRE TREAD**

REIFENLAUFFLÄCHE

BANDE DE ROULEMENT DE PNEUMATIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**11.10.2023 Bulletin 2023/41**

(73) Proprietor: **Bridgestone Europe NV/SA
1930 Zaventem (BE)**

(72) Inventors:
• **KURAKIN, Alexander
00128 Roma (IT)**

• **SANTANGELI, Fabio
00128 Roma (IT)**
• **AMENTA, Alessandro
00128 Roma (IT)**

(74) Representative: **Marchetti, Alessio
Bridgestone Europe N.V./S.A. - Italian Branch
Technical Center
Via del Fosso del Salceto, 13/15
00128 Roma (IT)**

(56) References cited:
**JP-A- 2009 263 587     JP-A- 2020 059 807**

(52) Cooperative Patent Classification (CPC): (Cont.)

C-Sets
**C08L 7/00, C08L 9/00, C08L 15/00, C08L 91/00, C08L 57/02, C08K 3/36, C08K 3/04, C08K 5/548, C08K 5/11, C08K 3/06, C08K 5/47, C08K 5/31, C08K 5/47**

**Description**

The present invention relates to a tread of a tyre, and to a winter tyre comprising such tread. In particular, the present invention finds advantageous, but not exclusive, application in passenger car tyres (PSR TYRE).

Winter tyres must meet the safety requirements relating to their grip performance in winter conditions, i.e. in conditions of ice and snow.

In order to guarantee even safer vehicles operations in winter weather conditions, winter tyres should also guarantee a high performance in terms of wet braking. Such a requirement is difficult to achieve since, generally, the solutions that promote wet braking, at the same time, lead to a worsening of the terms of road grip in winter conditions.

JP 2020 059807 A is a patent literature example that discloses a winter tire having a high level of snow performance, wet performance, and low rolling resistance.

The combination of property of a tread of a tyre can be achieved by tailoring the tread pattern design characteristic as well as the rubber composition of which the tread pattern is made. Both technologies may act in synergy to meet the expected requirements.

Usually, rubber compositions for use in tread for winter tyres need to remain soft in low temperature conditions. Softer tyres are able to engage more efficiently with the icy or snowy road surface, improving grip and handling. Unlike summer tyres, which harden quickly in cold temperatures, winter tyres perform best in temperatures below +7 degrees C.

Conventionally, rubber compositions used for treads for winter tyres contain natural rubber (NR) and polybutadiene rubber (BR) as a major synthetic component of the rubber blend. NR ensure softness of the composition and BR is known to provide the necessary level of grip required in temperature condition below +7 degrees C, because of its intrinsically low glass transition temperature (Tg).

Instead, an increase in the amount of silica and/or solution styrene-butadiene (sSBR) in the tread rubber composition, while leading to a significant increase in terms of wet braking, at the same time lead to a worsening in terms of grip on snow and ice.

Tread pattern characteristics that lead to optimal winter performance are, for example, the depth of the tread grooves, which provide a cavity for snow thereby providing enhanced grip, or the number, the geometry and the arrangement of the sipes in the tread blocks.

Herein and after the term "rib" refers to the raised section of the tread pattern, spaced by the grooves and made up of tread blocks.

Herein and after, the term "groove" refers to the channels which run along the longitudinal direction and axial direction of the tyre, which provide a space between two adjacent tread ribs, or two adjacent tread blocks, having a width higher than 2 mm and a depth along the radial direction of the tyre at least higher than 50% of the full tread depth.

Herein and after, the term "tread depth" refers to the distance from the surface of the tread to the bottom of the deepest groove.

Herein and after, the term "longitudinal direction" refers to the rolling direction of the tyre and is conventionally identified in a cartesian plane as the direction along the y axis.

Herein and after, the term "axial direction" refers to the direction perpendicular to the longitudinal direction, extending laterally with respect to the tyre rolling direction and is conventionally identified in a cartesian plane as the direction along the x axis.

Herein and after, the term "radial direction" refers to the direction along the radius of the tyre, that is to say any direction that passes through the axis of rotation of the tyre and is substantially perpendicular to this direction, and is conventionally identified in a cartesian plane as the direction along the z axis.

Herein and after the term "tread blocks" refers to the raised rubber segments, delimited by edges, that make contact with the road surface and provide traction.

Herein and after, the term "sipe" refers to any of the small and narrow incisions molded in the tread blocks having the shape of periodically repeated elements drawn up across the axial and/or longitudinal direction of the tyre, having at least two end points and aa width of at most 1 mm, suitable for providing extra traction and preventing skids.

Herein and after, the term "sipe element" refers to any of the periodically repeated straight lines of which the sipe is constituted.

Herein and after, the term "slot" refers to any narrow incision molded in the tread blocks of a tyre, having at least two end points and having a width at least higher than 1 mm and up to 2 mm and a depth at least lower than 50% of the full tread depth.

Herein and after, the term "block edge" refers to the portion of the tread block adjacent to a a slot or a grove.

It is known that the sipes of a winter tread pattern are able to enhance tyre traction and stopping distance. In normal conditions, sipes make the tyre tread more flexible and increase the ability of the tyre to push into small variations on road surfaces, favoring road contact and a stronger grip. In wet conditions, sipes are responsible to break the water film to avoid hydroplaning by channeling water outside the contact area between tyre and road surface, increasing the wet grip. In winter conditions, sipes increase traction as the incisions open as the tread is pushed against the road and capture snow inside. Normally, the sipe's and block edges' geometry and configuration is aimed to balance pattern stiffness, in order to achieve high performances both in terms of winter and wet traction.

Accordingly there is a need to find a solution for a winter tread combining composition and pattern properties, which is able to achieve high wet traction performance while maintaining good winter performance on snow and ice.

The inventors of the present invention have devised a solution able of satisfying the aforementioned need, resulting in a significant improvement both in terms of wet braking and in terms of grip on snow and ice. In particular, the present invention is based on a combination of a particular tread pattern with a particular composition by which the tread itself is made up.

A first aspect of the present invention is a tread of a tyre having a tread pattern with a longtotal index (As) equal to or less than 17; said tread being characterized in that it is made up of a rubber composition comprising (a) a crosslinkable unsaturated chain polymer base comprising from 10 to 50 phr of a modified styrene-butadiene copolymer rubber having a glass-transition temperature (Tg) of -50 ° C or less ; (b) a filler comprising 40 to 100 phr of silica; (c) a plasticizer system comprising an hydrocarbon resin and from 8 to 25 phr of octyloleate; and (d) a vulcanization system said hydrocarbon resin having a softening point comprised between 110 and 145 °C, preferably between 110 and 128 °C and an average molecular weight comprised between 700 and 1500 g/mol.

A second aspect of the present invention is a winter tyre comprising a tread according to the first aspect.

Preferred features of the invention are the object of the dependent claims.

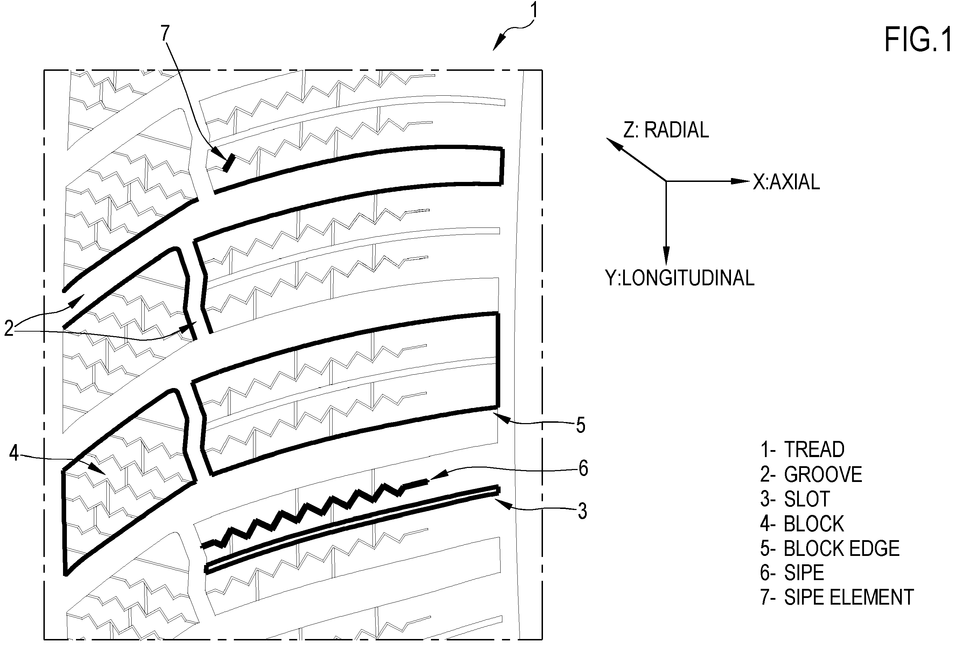

Fig. 1 is an example of a detail of the front view of a tread (1), comprising tread blocks (4) with respective block edges (5) being adjacent to grooves (2) or slots (3), the tread blocks comprising sipes (6), wherein each sipe is formed of several sipe elements (7).

Herein and after, the term "cross-linkable unsaturated-chain polymer base" refers to any natural or synthetic non-cross-linked polymer capable of assuming all of the chemical-physical and mechanical characteristics typically assumed by elastomers after cross-linking (vulcanization) with sulfur-based systems.

Here and hereinafter, vulcanization system refers to a complex of ingredients comprising curing agent, e.g. sulfur, and accelerating compounds, that in the preparation of the composition are added in a final mixing stage and have the purpose of promoting the vulcanization of the polymer base once the composition is subjected to a vulcanization temperature.

Herein and after the term "longtotal index (As)" refers to the sum of the projections of the sipes (6) and the block edges (5), taking into account every single element (7) of which the sipe (6) or block edge (5) is drawn up, along the tyre axial direction, divided by the circumference of the tyre, and is calculated by the following formula:

$$A_s = \frac{\sum_i^{\#sipes} L_{s,i}(\cos\theta_{s,i})^{\wedge}2}{TireCirc}$$

Ls (cos Θs) is the orthogonal projection of each single element (7) constituting the sipe (6) or block edge (5), along the axial direction of the tyre.

The higher is the value of the longtotal index As, the higher is the number of the sipes (6) and of the block edges(5) which are overall oriented in the axial direction; the lower is the value of the longtotal index, the lower is the number of the sipes (6) and of the block edges (5) which are overall oriented in the axial direction.

Preferably, said tread pattern has a longtotal index $A_s$ equal to or less than 15.

More preferably, said tread pattern has a longtotal index $A_s$ equal or less than 13.

The rubber composition according to the present invention contains from 10 to 50 phr of a modified styrene-butadiene copolymer rubber having a glass-transition temperature (Tg) of -50°C or less. A preferred example of the said modified styrene-butadiene copolymer rubber is described in EP3372639A1 (paragraphs [0027] - [0065]). Preferably said modified styrene-butadiene copolymer is included in the rubber composition in a quantity ranging from 20 to 40 phr, more preferably 20 to 30 phr.

The rubber composition according to the present invention contains a hydrocarbon resin. In certain embodiments, the softening point of the hydrocarbon resin is 110°C or higher, preferably 115°C or higher, preferably 118°C or higher. From the perspective of suppressing an increase in tanδ at 0°C, the softening point of the hydrocarbon resin is preferably 145°C or lower. For example, the softening point may be 143°C or lower, 140°C or lower, 136°C or lower, 135°C or lower, 133°C or lower, or 130°C or lower. From the perspective of miscibility of the resin with the rubber component, the weight average molecular weight of the hydrocarbon resin will generally be in the range from 700 to 1500 g/mol. The weight average molecular weight is determined by gel permeation chromatography (GPC) relative to polystyrene standards.

In some embodiments, the weight average molecular weight of the resin may be 800 g/mol or higher, preferably 900 g/mol or higher, more preferably 1000 g/mol or higher. In other embodiments, the weight average molecular weight of the hydrocarbon resin may be 1400 g/mol or lower, preferably 1300 g/mol or lower, more preferably 1200 mol/g or lower.

In one embodiment, the hydrocarbon resin will have a softening point higher than 100°C and a weight average molecular weight of 700 to 1500 g/mol. More preferably, the hydrocarbon resin will be a fully hydrogenated C9 resin having a softening point higher than 100°C and a weight average molecular weight of 700 to 1500 g/mol.

The hydrocarbon resin is one produced by subjecting a resin to substantially complete (e.g. complete) reductive hydrogenation. The resin used as the starting material is selected from C5 resins, C5/C9 resins, C9 resins and combinations thereof.

Examples of the C5 resin which may be used to produce a fully hydrogenated C5 resin include aliphatic petroleum resins obtained by (co)-polymerizing a C5 fraction obtained by pyrolysis of naphtha in the petrochemical industry. The C5 fraction normally contains olefin-based hydrocarbons, such as 1-pentene, 2-pentene, 2-methyl-1-butene, 2-methyl-2-butene, and 3-methyl-1-butene; di-olefin-based hydrocarbons, such as 2-methyl-1,3-butadiene, 1,2-pentadiene, 1,3-pentadiene, and 3-methyl-1,2-butadiene. It may also contain other monomers, for example DCPD. Any commercially available product may be employed as the C5 resin.

The term "C5/C9 resin" refers to a C5-C9 synthetic petroleum resin, and examples include a petroleum derived C5-C11 fraction including AlCl3; solid polymers obtained by polymerization using a Friedel-Crafts catalyst such as BF3, and more specific examples thereof include copolymers containing styrene, vinyl toluene, α-methyl styrene, indene, or the like as main components. From the perspective of compatibility with the rubber component, a resin having a small amount of C9 or greater components is preferable as the C5/C9 resin. For example, the amount of C9 or greater components may be less than 50 wt.%, and preferably less than 40 wt.%, based on the total amount of the resin. Any commercially available product can be used as the C5/C9 resin.

The term "C9 resin" refers to a C9 synthetic petroleum resin and examples include a polymer obtained by polymerization using a Friedel-Crafts catalyst such as AlCl3 or BF3. Examples of the C9 resin include a copolymer containing indene, styrene, α-methyl styrene, vinyl toluene, or the like as main components. Any commercially available product may be employed as the C9 resin. Examples include resins having a softening point of about 118-128°C, a weight average molecular weight (Mw) of about 1100 g/mol, and a glass transition temperature (Tg) of about 65-75°C.

The glass transition temperature (Tg) of the hydrocarbon resin and the modified styrene-butadiene copolymer is measured by differential scanning calorimetry (DSC). Tg values reported herein are determined using DSC, starting temperature: -140°C; temperature ramp: 15°C/min. Unless otherwise specified, all test methods herein described are conducted at 23°C and 50% relative humidity.

As used herein, the term "fully hydrogenated" means that the resin component contains less than 5% olefinic protons. In some embodiments, the fully hydrogenated resin may contain less than 4% olefinic protons, preferably less than 3%, more preferably less than 2%, e.g. less than 1%, less than 0.5%, or less than 0.1%, e.g. less than 0.05%. In one embodiment, the fully hydrogenated resin may contain from 0 to about 3% olefinic protons, i.e. it will be about 97 to 100% hydrogenated. In one embodiment, the fully hydrogenated resin may contain from 0 to about 2% olefinic protons, i.e. it will be about 98 to 100% hydrogenated. In one embodiment, the fully hydrogenated resin may contain from 0 to about 1% olefinic protons, i.e. it will be about 99 to 100% hydrogenated. In one embodiment, it may contain about 0% olefinic protons. In a preferred embodiment the hydrocarbon resin is included in the rubber composition in a quantity ranging from 2 to 15 phr, more preferably from 5 to 10 phr.

The rubber composition object of the present invention comprises silica as a filler. Any known silica filler or combination of different types of silica can be used in the rubber compositions herein described. The silica may be selected according to its specific surface area. The average specific surface area of the silica may be determined by N2 adsorption herein referred as NSA, nitrogen surface area, measured according to the Brunauer-Emmett-Teller (BET) method; and by cetyltrimethylammonium bromide (CTAB) adsorption. The CTAB specific surface area is the external surface. The Brunauer-Emmet-Teller (BET) method is described in the Journal of the American Chemical Society, Vol. 60, page 309, February 1938, and corresponding to standard NF ISO 5794-1, Appendix D (June 2010). The cetyltrimethylammonium bromide (CTAB) adsorption method corresponds to ASTM D6845. The silica for use in the invention may have a NSA in the range of from 105 and 145 m²/g. The silica for use in the invention may have a CTAB specific surface area of from 100 and 130 m²/g. The silica may be comprised in the rubber composition according to the invention in a quantity ranging from 40 to 100 phr, preferably from 50 to 90 phr, more preferably from 60 to 80 phr.

In a preferred embodiment the rubber composition further comprise a silane coupling agent. Silane coupling agent are used to increase the compatibility of silica with the cross-linkable polymer base. Any silane coupling agent known to the subject matter expert may be used in the rubber composition. In a preferred embodiment the silane coupling agent used in the rubber composition is bis(triethoxysilylpropyl) disulfide (Si 75). The silane coupling agent may be introduced in the rubber composition in a quantity ranging from 3 to 10 phr.

In a preferred embodiment silica is not the only filler included in the rubber composition, which further comprises carbon black. Carbon black may be introduced in the composition in a quantity ranging from 3 to 20 phr, more preferably 5 to 15 phr, more preferably 8 to 12 phr.

The rubber composition object of the present invention further comprises octyl oleate in the plasticizer system.

According to present invention, octyl oleate is introduced in the composition in a quantity ranging from 8 to 25 phr, more preferably from 10 to 20 phr.

In a preferred embodiment the cross-linkable polymer base comprises natural rubber (NR) and polybutadiene rubber (BR). NR is included in the rubber composition in a quantity ranging from 40 to 60 phr, preferably from 45 to 55 phr, and BR is included in the rubber composition in a quantity ranging from 15 to 50 phr, more preferably from 20 to 30 phr.

Preferably, said cross-linkable unsaturated-chain polymer base comprises from 20 to 30 phr of a modified styrene-butadiene copolymer rubber having a glass-transition temperature (Tg) of -50°C or less, from 45 to 55 phr of NR and from 20 to 30 phr of BR.

In a preferred embodiment, the tread object of the present invention is used for passenger tyres.

A second aspect of the present invention is a winter tyre comprising a tread according to the first aspect.

Examples

The following examples are for illustrative and nonlimiting purposes for a better understanding of the invention with the help of Figure 1, which illustrates three different tread patterns.

Four compositions (A - D) were made up. A first composition(A) is a reference composition, while the other three compositions (B - D) are compositions according to the invention. Each of the four compositions was subsequently subjected to a series of tests in order to evaluate their adhesion in wet conditions and in winter conditions. In particular, the values of TanD at 0 °C and E' at -20 °C were measured for each of the compositions, which are respectively indicative of wet braking and grip index in winter conditions.

The compositions of the examples are obtained according to the procedure below:

- preparation of the compositions-

(1st mixing phase)

In a tangential rotors mixer having an internal volume between 230 and 270 liters, all the ingredients except the vulcanization system were loaded before the start of mixing, reaching a filling factor of between 66-72%.

The mixer was operated at a speed between 40 and 60 rpm, and the mixture formed was discharged once it reached a temperature between 140 and 160 °C.

(2nd mixing phase)

The mixture obtained from the previous phase was again mixed in a mixer at a speed between 40 and 60 rpm and, subsequently, discharged once a temperature between 130 and 150 °C was reached.

(3rd mixing phase)

The vulcanization system was added to the mixture obtained from the previous phase, reaching a filling factor between 63 and 67%.

The mixer was operated at a speed between 20 and 40 rpm, and the mixture formed was discharged once it reached a temperature between 100-110 °C.

Table I shows the four rubber compositions A - D.

Tabella I

|  |  | A | B | C | D |
|---|---|---|---|---|---|
| Polymer | NR | 50 | 50 | 50 | 50 |
|  | BR | 50 | 25 | 25 | 25 |
|  | Modified SBR | -- | 25 | 25 | 25 |
| Filler | Silica | 52 | 70 | 63 | 70 |
|  | CB (N234) | 16.6 | 10 | -- | 10 |
|  | CB (N330) | -- | -- | 10 | -- |
| Silane binding agent | Si75 | 4.16 | 5.6 | 5.2 | 5.6 |

(continued)

|  |  | A | B | C | D |
|---|---|---|---|---|---|
| Plasticizer | Octyloleate | 6 | 14 | 14 | 17 |
|  | MES oil | 15 | 10 |  | 5 |
|  | Hydrocarbon resin | -- | 7 | 7 | 11 |
|  | Aromatic C9 resin | 7 | -- | -- | -- |
| Vulcanization system | Sulphur | 1.35 | 1.35 | 1.35 | 1.35 |
|  | TBBS | 0.85 | 1.15 | 1.15 | 1.15 |
|  | DPG | 0.7 | 1 | 1 | 1 |
|  | MBTS | 0.65 | 0.9 | 0.9 | 0.9 |

NR is a 1,4-cis polyisoprene rubber of natural origin.
BR is a polymer base consisting of polybutadiene.

Modified SBR was prepared by the following procedure: A cyclohexane solution of 1,3-butadiene and a cyclohexane solution of styrene were charged in a dry, nitrogen-purged pressure-resistant glass vessel (800 mL), such that 1,3-butadiene monomer was 67.5 g and styrene was 7.5 g; 0.6 mmol of 2,2-di(tetrahydrofuryl)propane and 0.8 mmol of n-butyllithium were added thereto; then polymerization was performed at 50°C for 1.5 hours. With respect to the polymerization reaction system of which the polymerization conversion rate was approximately 100% at this time, 0.72 mmol of the modifier was added, and modification reaction was performed at 50°C for 30 minutes. Afterward, 2 mL of 5 mass% 2,6-di-t-butyl-p-cresol (BHT) in isopropanol was added to terminate the reaction, and the modified SBR was obtained by drying with an ordinary method. As a result of measuring the microstructure of the obtained modified SBR, the bound styrene content was 10 mass%, the vinyl content of the butadiene moiety was 40%, and the peak molecular weight was 200, 000.

The silica used is marketed by Evonik under commercial name ULTRASIL5500 GR

CB is carbon black classified as N234 or N330.

The silane binding agent used is Si75, marketed by Evonik

Octyloleate is marketed by Traquisa under commercial name Permavis T
MES oil is marketed by Nynas under commercial name Nytex832
The hydrocarbon resin used is a fully hydrogenated C9 resin
Aromatic C9 resin is marketed by Rain Carbon Inc. under the commercial name Novares TD100

As is evident from Table I, the compositions of the present invention differ from the comparison composition in (i) the use of modified SBR among the polymeric bases, (ii) a higher quantity of silica and octyloleate and (iii) the use of an hydrocarbon resin in the plasticizer system.

As mentioned above, for the A-D compositions the values of TanD at 0 °C and E' at -20 °C were measured (according to ASTM D5992 standard).

Table II shows the results of the tests carried out.

Tabella II

|  | A | B | C | D |
|---|---|---|---|---|
| TanD at 0°C * | 100 | 106 | 107 | 107 |
| E' at -20°C ** | 100 | 95 | 93 | 97 |

* higher is better
** lower is better

The four compositions A - D were tested on three different tread patterns (Pattern 1 - 3).

Patterns 1 - 3 are represented in figure 1. In particular, Patterns 1 and 2 are out of the invention and have a longtotal index equal to 22.2 and 19.8 respectively, and the Pattern 3 is an example of the invention and has a longtotal index equal to 11.5.

Each of the three Patterns was made up alternately with each of the four rubber compositions of table I.

The twelve treads made up by the combination of the three Patterns and the four rubber compositions were tested in terms of wet braking. The wet braking performance was determined by the braking distance of 80 km/h on wet roads. In particular, meters of braking from 80 kph to 20 kph are measured.

Table III shows the values of the wet braking test. In order to more clearly display the advantages of the compositions according to the invention, the values of Table III were indexed to the combination pattern 1 and composition A. The higher the value the better the wet braking.

Tabella III

|  | Compound A | Compound B | Compound C | Compound D |
|---|---|---|---|---|
| Pattern 1 | 100 | 102 | 101 | 104 |
| Pattern 2 | 97 | 103 | 100 | 103 |
| Pattern 3 | 88 | 106 | 106 | 108 |

Furthermore, the six treads obtained by making Patterns 1 - 3 with compositions A and C have been tested in terms of snow traction. The snow traction performance was determined by timing (seconds are measured) to accelerate from 5 km/h to 35 km/h on road covered by snow.

Snow traction: seconds taken to pass from 5 kph to 35 kph.

Table IV shows the values of the snow traction. In order to more clearly display the advantages of the compositions according to the invention, the values of Table IV were indexed to the combination pattern 1 and composition A. The higher the value the better the snow traction.

Tabella IV

|  | Compound A | Compound C |
|---|---|---|
| Pattern 1 | 100 | 100 |
| Pattern 2 | 105 | 104 |
| Pattern 3 | 107 | 106 |

As can be seen from the values shown in Tables III and IV, the treads obtained according to the dictates of the present invention, i.e. by combining Pattern 3 with the B D compositions, guarantee both improved performance in terms of wet braking and, at the same time, highest levels by snow traction.

To sum up, the inventors of the present invention have the merit of having found that a tread with a tread pattern with longtotal index (As) less than or equal to 17 if made up with a rubber blend having a particular composition in terms of polymeric base, amount of silica and plasticizer system, can satisfy the safety requirements in terms of wet grip of winter treads.

**Claims**

1. Tread of a tyre having a tread pattern with a longtotal index (As), as defined in the description, equal to or less than 17; said tread being **characterized in that** it is made up of a rubber composition comprising (a) a crosslinkable unsaturated chain polymer base comprising from 10 to 50 phr of a modified styrene-butadiene copolymer rubber having a glass-transition temperature (Tg), measured by differential scanning calorimetry and as defined in the description, of -50 ° C or less, (b) a filler comprising 40 to 100 phr of silica; (c) a plasticizer system comprising a hydrocarbon resin and from 8 to 25 phr of octyloleate; and (d) a vulcanization system; said hydrocarbon resin having a softening point of 110 °C or higher, and an average molecular weight comprised between 700 and 1500 g/mol.

2. Tread of a tyre according to claim 1, **characterized in that** said tread pattern has a longtotal index (As) equal to or less than 15, preferably less than 13.

3. Tread of a tyre according to claim 1 or 2, **characterized in that** said crosslinkable unsaturated chain polymer base further comprises from 15 to 50 phr of polybutadiene rubber (BR) and from 40 to 60 phr of natural rubber (NR).

4. Tread of a tyre according to any of the previous claims, **characterized in that** said plasticizer system comprises from 2 to 15 phr of hydrocarbon resin having a Softening Point comprised between 118 and 128 °C and an average molecular weight comprised between 700 and 1500 g/mol.

5. Tread of a tyre according to any of the previous claims, **characterized in that** said silica has a surface area having a CTAB value comprised between 100 and 130 m$^2$/g and an NSA value comprised between 105 and 145 m$^2$/g, wherein the CTAB value is measured according to ASMT D6845 and the NSA value is measured by Brunauer-Emmett-Teller (BET) method.

6. Tread of a tyre according to any of the previous claims, **characterized in that** said hydrocarbon resin has a glass-transition temperature (Tg), measured by differential scanning calorimetry, comprised between 65 and 75°C.

7. Tread of a tyre according to any of the previous claims, **characterized in that** said hydrocarbon resin contains less than 5% of olefinic protons.

8. Tread of a tyre according to any of the previous claims, **characterized in that** said cross-linkable unsaturated-chain polymer base comprises from 20 to 40 phr, preferably from 20 to 30 phr, of a modified styrene-butadiene copolymer rubber having a glass-transition temperature (Tg) of -50°C or less, from 45 to 55 phr of natural rubber (NR) and from 20 to 30 phr of polybutadiene rubber (BR).

9. Tread of a tyre according to any of the previous claims, **characterized in that** said filler comprises carbon black and from 60 to 80 phr of silica.

10. Tread of a tyre according to any of the previous claims, **characterized in that** said plasticizer system comprises from 5 to 10 phr of hydrocarbon resin and from 10 to 20 phr of octyloleate.

11. Tread of a tyre according to any of the previous claims, **characterized in that** said rubber composition further comprises a silane coupling agent.

12. Tread of a tyre according to any of the previous claims, **characterized in that** it is used for passenger tyres.

13. A winter tyre comprising a tread according to any of the previous claims.


**Patentansprüche**

1. Lauffläche eines Reifens, die ein Laufflächenprofil mit einem Längsgesamtindex (As) wie in der Beschreibung definiert, von gleich oder kleiner als 17, aufweist; wobei die Lauffläche **dadurch gekennzeichnet ist, dass** sie aus einer Kautschukzusammensetzung ausgebildet ist, umfassend (a) eine vernetzbare ungesättigte Kettenpolymerbasis, umfassend von zu 10 bis 50 phr einen modifizierten Styrol-Butadien-Copolymer-Kautschuk, der eine Glasübergangstemperatur (Tg), gemessen durch Differential-Raster-Kalorimetrie und wie in der Beschreibung definiert, von -50 °C oder weniger aufweist, (b) einen Füllstoff, umfassend zu 40 bis 100 phr Kieselerde; (c) ein Weichmachersystem, umfassend ein Kohlenwasserstoffharz und von zu 8 bis 25 phr Octyloleat; und (d) ein Vulkanisationssystem; wobei das Kohlenwasserstoffharz einen Erweichungspunkt von 110 °C oder höher und ein durchschnittliches Molekulargewicht, das zwischen 700 und 1500 g/mol liegt, aufweist.

2. Lauffläche eines Reifens nach Anspruch 1, **dadurch gekennzeichnet, dass** das Laufflächenprofil einen Längsgesamtindex (As) von gleich oder kleiner als 15, vorzugsweise kleiner als 13 aufweist.

3. Lauffläche eines Reifens nach Anspruch 1 oder 2,
**dadurch gekennzeichnet, dass** die vernetzbare ungesättigte Kettenpolymerbasis ferner von zu 15 bis 50 phr Polybutadien-Kautschuk (BR) und von zu 40 bis 60 phr Naturkautschuk (NR) aufweist.

4. Lauffläche eines Reifens nach einem der vorstehenden Ansprüche, **dadurch gekennzeichnet, dass** das Weichmachersystem von zu 2 bis 15 phr Kohlenwasserstoffharz, das einen Erweichungspunkt zwischen 118 und 128 °C, und ein durchschnittliches Molekulargewicht, das zwischen 700 und 1500 g/mol liegt, aufweist, umfasst.

5. Lauffläche eines Reifens nach einem der vorstehenden Ansprüche, **dadurch gekennzeichnet, dass** die Kieselerde einen Oberflächenbereich, der einen CTAB-Wert, der zwischen 100 und 130 m$^2$/g aufweist, und einem NSA-Wert, der zwischen 105 und 145 m$^2$/g, liegt, aufweist, wobei der CTAB-Wert gemäß ASMT D6845 gemessen wird und der NSA-Wert durch das Brunauer-Emmett-Teller-Verfahren (BET) gemessen wird.

6. Lauffläche eines Reifens nach einem der vorstehenden Ansprüche, **dadurch gekennzeichnet, dass** das Kohlenwasserstoffharz eine Glasübergangstemperatur (Tg), gemessen durch Differential-Raster-Kalorimetrie, die zwischen 65 und 75 °C liegt, aufweist.

7. Lauffläche eines Reifens nach einem der vorstehenden Ansprüche, **dadurch gekennzeichnet, dass** das Kohlenwasserstoffharz weniger als zu 5 % olefinische Protonen enthält.

8. Lauffläche eines Reifens nach einem der vorstehenden Ansprüche, **dadurch gekennzeichnet, dass** die vernetzbare ungesättigte Kettenpolymerbasis von zu 20 bis 40 phr, vorzugsweise von zu 20 bis 30 phr einen modifizierten Styrol-Butadien-Copolymer-Kautschuk, der eine Glasübergangstemperatur (Tg) von -50 °C oder weniger aufweist, von zu 45 bis 55 phr Naturkautschuk (NR) und von zu 20 bis 30 phr Polybutadien-Kautschuk (BR), umfasst.

9. Lauffläche eines Reifens nach einem der vorstehenden Ansprüche, **dadurch gekennzeichnet, dass** der Füllstoff Ruß und von zu 60 bis 80 phr Kieselerde umfasst.

10. Lauffläche eines Reifens nach einem der vorstehenden Ansprüche, **dadurch gekennzeichnet, dass** das Weichmachersystem von zu 5 bis 10 phr Kohlenwasserstoffharz und von zu 10 bis 20 phr Octyloleat umfasst.

11. Lauffläche eines Reifens nach einem der vorstehenden Ansprüche, **dadurch gekennzeichnet, dass** die Kautschukzusammensetzung ferner einen Silan-Haftvermittler umfasst.

12. Lauffläche eines Reifens nach einem der vorstehenden Ansprüche, **dadurch gekennzeichnet, dass** sie für Pkw-Reifen verwendet wird.

13. Winterreifen, umfassend eine Lauffläche nach einem der vorstehenden Ansprüche.


**Revendications**

1. Bande de roulement d'un pneumatique ayant un motif de bande de roulement avec un indice de longueur totale (As), tel que défini dans la description, égal ou inférieur à 17 ; ladite bande de roulement étant **caractérisée en ce qu'**elle est constituée d'une composition de caoutchouc comprenant (a) une base polymère à chaîne insaturée réticulable comprenant de 10 à 50 phr d'un caoutchouc copolymère styrène-butadiène modifié ayant une température de transition vitreuse (Tg), mesurée par calorimétrie à balayage différentiel et telle que définie dans la description, de -50 °C ou moins, (b) une charge comprenant de 40 à 100 phr de silice ; (c) un système plastifiant comprenant une résine hydrocarbonée et de 8 à 25 phr d'octyloléate ; et (d) un système de vulcanisation ; ladite résine hydrocarbonée ayant un point de ramollissement de 110 °C ou plus et un poids moléculaire moyen compris entre 700 et 1 500 g/mol.

2. Bande de roulement d'un pneumatique selon la revendication 1, **caractérisée en ce que** ledit motif de bande de roulement a un indice de longueur totale (As) égal ou inférieur à 15, de préférence inférieur à 13.

3. Bande de roulement d'un pneumatique selon la revendication 1 ou 2, **caractérisée en ce que** ladite base polymère à chaîne insaturée réticulable comprend en outre de 15 à 50 phr de caoutchouc polybutadiène (BR) et de 40 à 60 phr de caoutchouc naturel (NR).

4. Bande de roulement d'un pneumatique selon l'une quelconque des revendications précédentes, **caractérisée en ce que** ledit système plastifiant comprend de 2 à 15 phr de résine hydrocarbonée ayant un point de ramollissement compris entre 118 et 128 °C et un poids moléculaire moyen compris entre 700 et 1 500 g/mol.

5. Bande de roulement d'un pneumatique selon l'une quelconque des revendications précédentes, **caractérisée en ce que** ladite silice a une surface ayant une valeur CTAB comprise entre 100 et 130 m$^2$/g et une valeur NSA comprise entre 105 et 145 m$^2$/g, dans laquelle la valeur CTAB est mesurée selon la norme ASMT D6845 et la valeur NSA est mesurée par le procédé Brunauer-Emmett-Teller (BET).

6. Bande de roulement d'un pneumatique selon l'une quelconque des revendications précédentes, **caractérisée en ce que** ladite résine hydrocarbonée a une température de transition vitreuse (Tg), mesurée par calorimétrie à balayage différentiel, comprise entre 65 et 75 °C.

7. Bande de roulement d'un pneumatique selon l'une quelconque des revendications précédentes, **caractérisée en ce que** ladite résine hydrocarbonée contient moins de 5 % de protons oléfiniques.

8. Bande de roulement d'un pneumatique selon l'une quelconque des revendications précédentes, **caractérisée en ce que** ladite base polymère à chaîne insaturée réticulable comprend de 20 à 40 phr, de préférence de 20 à 30 phr, d'un caoutchouc copolymère styrène-butadiène modifié ayant une température de transition vitreuse (Tg) inférieure ou égale à -50 °C, de 45 à 55 phr de caoutchouc naturel (NR) et de 20 à 30 phr de caoutchouc polybutadiène (BR).

9. Bande de roulement d'un pneumatique selon l'une quelconque des revendications précédentes, **caractérisée en ce que** ladite charge comprend du noir de carbone et de 60 à 80 phr de silice.

10. Bande de roulement d'un pneumatique selon l'une quelconque des revendications précédentes, **caractérisée en ce que** ledit système plastifiant comprend de 5 à 10 phr de résine hydrocarbonée et de 10 à 20 phr d'octyloléate.

11. Bande de roulement d'un pneumatique selon l'une quelconque des revendications précédentes, **caractérisée en ce que** ladite composition de caoutchouc comprend en outre un agent de couplage au silane.

12. Bande de roulement d'un pneumatique selon l'une quelconque des revendications précédentes, **caractérisée en ce qu'**elle est utilisée pour les pneumatiques pour voitures particulières.

13. Pneumatique pour l'hiver comprenant une bande de roulement selon l'une quelconque des revendications précédentes.

FIG.1

Z: RADIAL

X:AXIAL

Y:LONGITUDINAL

1- TREAD
2- GROOVE
3- SLOT
4- BLOCK
5- BLOCK EDGE
6- SIPE
7- SIPE ELEMENT

EP 4 257 369 B1

**EP 4 257 369 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2020059807 A

- EP 3372639 A1

**Non-patent literature cited in the description**

- *Journal of the American Chemical Society*, February 1938, vol. 60, 309